# EUROPÄISCHE PATENTANMELDUNG

(11) **EP 1 273 953 A1**
(43) Veröffentlichungstag der Anmeldung: **08.01.2003**
(21) Anmeldenummer: 02100723.2
(22) Anmeldetag: 19.06.2002
(51) Int. Cl.: G02B 21/06, G02B 21/08, G03B 27/54

(54) **Vorrichtung zur farbneutralen Helligkeitseinstellung im Beleuchtungsstrahlengang eines Mikroskops**

(30) Priorität: 04.07.2001 DE 10132360
(71) Anmelder: Leica Microsystems Wetzlar GmbH, 35578 Wetzlar (DE)
(72) Erfinder: Weiss, Albrecht, 35440 Linden (DE)
(74) Vertreter: Reichert, Werner F., Dr.

(57) **Zusammenfassung**

Eine Vorrichtung zur Regulierung der Helligkeit einer als Glühlampe ausgebildeten Lichtquelle (2) im Beleuchtungsstrahlengang (8) eines Mikroskops (1), wobei die Helligkeit der Lichtquelle (2) durch Erhöhen oder Erniedrigen der der Lichtquelle (2) zugeführten elektrischen Leistung veränderbar ist, ist dadurch gekennzeichnet, dass eine mit der Erniedrigung der zugeführten elektrischen Leistung einhergehende Rotverschiebung des Spektrums des von der Lichtquelle (2) abgestrahlten Lichts im Beleuchtungsstrahlengang (8) durch ein eine Blauverschiebung des Spektrums herbeiführendes variables optisches Filter (16) kompensiert wird. Dadurch wird eine farbneutrale Regulierung der Helligkeit des Beleuchtungslichts erzielt.

## Beschreibung

Die Erfindung betrifft eine Vorrichtung zur farbneutralen Helligkeitseinstellung im Beleuchtungsstrahlengang eines Mikroskops.

Bei optischen Geräten, wie z.B. Lichtmikroskopen, in denen ein zu untersuchendes Objekt durch eine Lichtquelle beleuchtet wird, ist es in der Regel wünschenswert, wenn die Helligkeit der Lichtquelle veränderbar ist, um die Beleuchtungsverhältnisse optimal an die Art des zu untersuchenden Objekts und an das verwendete Beobachtungsverfahren (z. B. Hellfeld, Polarisation, Interferenzkontrast oder Phasenkontrast) anpassen zu können. Als Lichtquellen kommen hierbei bevorzugt Glühlampen bzw. Halogenlampen zum Einsatz, da diese von zahlreichen Herstellern in verschiedensten Ausgestaltungen hinsichtlich Leistung, Betriebsspannung, Wendelform, Lebensdauer und Farbtemperatur erhältlich sind.

Bei Mikroskopen, die mit einer Glühlampe als Lichtquelle arbeiten, wird die Helligkeit der Lichtquelle üblicherweise dadurch verändert, dass die der Lichtquelle zugeführte elektrische Leistung durch eine entsprechende Verminderung der der Glühlampe zugeführten elektrischen Spannung, bzw. des elektrischen Stromes erhöht oder erniedrigt wird.

Aufgrund des einem Schwarzen Strahler ähnlichen Verhaltens von Glühlampen existiert bei dieser Art der Helligkeitsveränderung das Problem, dass sich die Farbtemperatur des von der Glühlampe emittierten Spektrums bei einer Reduzierung der zugeführten Lampenleistung vom blauen Spektralbereich aus zum roten Spektralbereich hin verschiebt, was allgemein auch als Rotverschiebung bezeichnet wird, die bei Mikroskopen in der Regel als nachteilig gilt. So führt beispielsweise eine Verminderung der an eine Glühlampe angelegten Spannung von 100 % auf 80 % der Nennspannung neben einer Reduzierung des Lichtstromes auf ca. 50% in gleicher Weise zu einer Herabsetzung der Farbtemperatur T von 3200 K auf 2950 K.

Aus der DE 41 42 925 A1 sind ein Verfahren und eine Vorrichtung zur farbneutralen Helligkeitsreglung eines Beleuchtungssystems für ein Mikroskop bekannt, bei denen die Helligkeit über den einer Hauptlichtquelle zugeführten elektrischen Strom auf einen gewünschten Wert eingestellt und gleichzeitig die damit verbundene Änderung der Farbtemperatur durch eine entsprechende Regelung des Lampenstromes einer Nebenlichtquelle (in einem zweiten Lampenhaus), mit einem geeigneten nachgeschalteten optischen Filter kompensiert wird, welches ein festes Transmissionsvermögen aufweist. Obwohl bei der beschriebenen Vorrichtung eine Erwärmung des Stativs durch die Anordnung der Nebenlichtquelle außerhalb des Stativs des Mikroskops herabgesetzt ist, fällt bei der Vorrichtung stets die volle Verlustleistung einer Glühbirne als Wärme an.

Die DE 195 13 350 A1 beschreibt ein Filter, das aus einer lichtundurchlässigen Filterscheibe mit in verschiedenen Bereichen der Filterscheibe unterschiedlich großen Öffnungen besteht. Infolge der unterschiedlich großen Öffnungen weist das Filter in den verschiedenen Bereichen der Filterscheibe eine unterschiedliche Transmission auf, so dass durch Verdrehen der in den Beleuchtungsstrahlengang eines optischen Instruments eingebrachten Filterscheibe die Helligkeit einer Glühlampe farbneutral verändert werden kann. Allerdings muss für eine farbneutrale Helligkeitsregelung die Glühlampe ebenfalls nach Möglichkeit stets im Bereich der Nennspannung betrieben werden, so dass es ebenfalls zu einer unerwünschten Erwärmung des Stativs, bzw. der Filterscheibe, sowie einer kürzeren Lebensdauer (im Vergleich zum Betrieb unterhalb der Nennleistung) der Glühlampe kommt.

Weiterhin beschreibt die DE 198 32 665 A1 ein Homogenisierungsfilter für ein optisches Strahlungsfeld eines Beleuchtungsstrahlengangs, welches in Zusammenwirkung mit einer Streuscheibe zu einer Homogenisierung der Lichtintensität in einer nachgeordneten Bildebene führt. Das Homogenisierungsfilter besteht aus einem transparenten Substrat, auf das ein Raster aus lichtundurchlässigen Flächenelementen mittels einer vor dem Substrat angeordneten gelochten Schablone oder einer auf das Substrat in einem fotolithographischen Verfahren aufgebrachten gelochten Schicht durch Bedampfen aufgebracht wird.

Durch die Erfindung soll die Aufgabe gelöst werden, eine Vorrichtung zu schaffen, die es ermöglicht, die Helligkeit im Beleuchtungsstrahlengang eines Mikroskops unter Beibehaltung der Farbtemperatur bei gleichzeitig geringer Wärmeentwicklung einstellen zu können.

Diese Aufgabe wird gemäß der Erfindung durch die Merkmale von Anspruch 1. Weitere Merkmale der Erfindung sind in den Unteransprüchen enthalten.

Gemäß der Erfindung wird bei der Vorrichtung zur farbneutralen Regulierung der Helligkeit einer durch eine Glühlampe gebildeten Lichtquelle, die im Beleuchtungsstrahlengang eines Mikroskops zur Beleuchtung des zu untersuchenden Präparats dient, die Helligkeit der Lichtquelle durch Erhöhen oder Vermindern der an die Glühlampe angelegten elektrischen Spannung, bzw. des durch die Glühlampe hindurchfließenden elektrischen Stromes - und somit der der Glühlampe zugeführten elektrischen Leistung - verändert. Die mit der Verminderung der Helligkeit verbundene Rotverschiebung des Spektrums bzw. Verrringerung der Farbtemperatur wird im Wesentlichen gleichzeitig oder eine kurze Zeit nach der Verminderung der Helligkeit durch ein eine zusätzliche Blauverschiebung des Spektrums herbeiführendes, variables optisches Filter kompensiert, welches in den Beleuchtungsstrahlengang des Mikroskops eingebracht wird. Das variable optische Filter, das erfindungsgemäß als Blaufilter ausgebildet ist, reduziert dabei insbesondere den Anteil des roten Lichts in dem von der Glühlampe ausgestrahlten Spektrum derart, dass das Verhältnis von rotem Anteil zu blauem Anteil des Spektrums beim reduzierten Helligkeitswert und beim ursprünglichen Helligkeitswert im Wesentlichen gleich ist, so dass das Auge des Betrachters im Wesentlichen dieselbe Farbtemperatur wahrnimmt.

Bei einer Erhöhung der Helligkeit der Glühlampe wird in entsprechend umgekehrter Weise der Rotanteil des Spektrum durch Verstellen des optischen Filters in der Weise erhöht, dass das Verhältnis von rotem Anteil zu blauem Anteil des Spektrums wieder den ursprünglichen Wert annimmt, ohne das sich die Farbtemperatur dabei ändert.

Hierdurch ergibt sich der Vorteil, dass die Glühlampe bei einer Verminderung der Helligkeit unterhalb ihrer Nennleistung betrieben werden kann, wodurch die Lebensdauer der Lampe erheblich erhöht und die Wärmeentwicklung sowie der Energieverbrauch der Lampe deutlich reduziert werden können. Insbesondere wird in der erfindungsgemäßen Vorrichtung die häufig als störend erachtete Erwärmung des Mikroskops oder von dessen Teilen beachtlich herabgesetzt. Ein weiterer Vorteil besteht darin, dass auf ein zweites Lampenhaus mit einer Nebenlichtquelle, wie vom Stand der Technik bekannt, verzichtet werden kann. Damit ist die erfindungsgemäße Lösung besonders kostengünstig.

Das Filter besitzt vorzugsweise ein sich über die Filterfläche hinweg änderndes Transmissionsvermögen, insbesondere für rotes Licht. Die Kompensation der Rotverschiebung des Spektrums bei einer Reduzierung der zugeführten elektrischen Leistung erfolgt dabei in erfindungsgemäßer Weise durch eine Veränderung der Lage des Filters im Beleuchtungsstrahlengang. Hierbei kann die Lage des Filters im einfachsten Falle manuell von Hand verändert werden. Bei der bevorzugten Ausführungsform der Erfindung wird die Lage des Filters im Beleuchtungsstrahlengang jedoch bei einer Verstellung der Helligkeit automatisch durch einen auf den Filter wirkenden Antrieb verändert, so dass der Bediener des optischen Instruments lediglich die gewünschte Helligkeit einstellen muss, ohne den Filter zur Einstellung der Farbtemperatur auf den ursprünglichen Wert von Hand zu verschieben.

Das Filter kann gemäß einer ersten Ausführungsform der Erfindung durch eine um eine Drehachse rotierbare, vorzugsweise kreisrunde Filterscheibe gebildet werden, deren Transmissionsvermögen insbesondere für rotes Licht - d.h. der Anteil der durch das Filter hindurchtretenden Lichtmenge bezogen auf die eingestrahlte Lichtmenge - entlang eines im Wesentlichen konzentrisch zur Drehachse verlaufenden Weges zunimmt. Hierdurch ergibt sich zum einen eine sehr kompakte Bauform der zugehörigen Vorrichtung, sowie die Möglichkeit, die Filterscheibe über einen kostengünstigen Motor, z.B. einen Schrittmotor, direkt anzutreiben, indem die Filterscheibe unmittelbar an der Antriebswelle des Motors befestigt wird.

In gleicher Weise ist es jedoch auch möglich, den Antrieb der Filterscheibe über ein Getriebe oder aber einen Zahnriemen vorzunehmen, wodurch die Stellgenauigkeit verbessert und der Motor in größerem Abstand vom Beleuchtungsstrahlengang positioniert werden kann.

Bei dieser eine kreisrunde Filterscheibe verwendenden Ausführungsform der Erfindung nimmt das Transmissionsvermögen für rotes Licht entlang des konzentrisch verlaufenden Weges vorzugsweise kontinuierlich von einem Minimalwert zu einem Maximalwert zu, wodurch sich in vorteilhafter Weise die Möglichkeit einer stufenlosen farbneutrale Regulierung der Helligkeit der Glühlampe ergibt.

In gleicher Weise ist es jedoch ebenfalls denkbar, dass das Transmissionsvermögen für rotes Licht vom Minimalwert zum Maximalwert schrittweise in Stufen zunimmt, wodurch sich die Herstellung der Filterscheibe vereinfachen sowie der Steuerungsaufwand reduzieren lässt.

Weiterhin ist es möglich, dass das Filter durch ein linear verschiebbares, beispielsweise rechteckig ausgebildetes Filter gebildet wird, das ein entlang eines im Wesentlichen parallel zur Verschieberichtung verlaufenden Weges zunehmendes Transmissionsvermögen insbesondere für rotes Licht aufweist, welches entlang des Weges von einem Minimalwert zu einem Maximalwert im Wesentlichen kontinuierlich - oder aber wie zuvor im Zusammenhang mit der kreisrunden Filterscheibe beschrieben - in Stufen zunimmt. Durch den Einsatz eines langgestreckten rechteckigen Filters ergibt sich der Vorteil, dass dieses besonders kostengünstiger gefertigt werden kann, da das Transmissionsvermögen der jeweiligen Flächenelemente in Richtung senkrecht zur Bewegungsrichtung konstant ist, so dass das rechteckige Filter z.B. durch Vorbeiführen mit variabler Geschwindigkeit an einer eine Interferenz- oder Reflexionsschicht aufbringenden Quelle auf einfache Weise hergestellt werden kann.

Beim kreisrunden Filter ist hingegen noch die vom Zentrum her zunehmende Ausdehnung der Flächenelemente zu berücksichtigen, so dass der konzentrische Weg mit variablem, zunehmendem Transmissionsvermögen vorzugsweise im Bereich der Außenseite der Filterscheibe angeordnet ist, wodurch sich gegenüber einer radial innenliegenden Anordnung des konzentrischen Weges beim Auftragen einer Interferenz- oder Reflexionsschicht in der zuvor beschriebenen Weise durch umfängliches Drehen der Filterscheibe ein in radialer Richtung betrachtet im Wesentlichen homogener Verlauf der Schicht ergibt.

Gemäß einer weiteren Ausgestaltung der Erfindung ist das Filter als ein Absorptionsfilter ausgebildet, und die Veränderung des Transmissionsvermögens des Filters für rotes Licht über die Filterfläche hinweg erfolgt durch eine Variation der Dicke des Filters. Hierzu kann bei dem scheibenförmig ausgebildeten Filter die Dicke des absorbierenden Mediums von einem Minimalwert von z.B. 0,1 bis 0,5 mm in umfänglicher Richtung vorzugsweise kontinuierlich auf einen Maximalwert von beispielsweise 1,5 bis 2 mm oder mehr zunehmen. Bei der rechteckförmigen Ausgestaltung des Filters kann die Dickenänderung beispielsweise dadurch herbeigeführt werden, dass dieses als Keil ausgebildet ist, der z.B. aus einem Filtermedium wie Glas oder Kunststoff mit einem rotes Licht absorbierenden Verhalten geschliffen, oder in sonstiger Weise hergestellt wird.

In gleicher Weise ist es möglich, das Filtermedium aus einem Kunststoffmaterial mit einer im Wesentlichen konstanten Dicke zu fertigen, welches bei der Herstellung durch Einbringen geeigneter Zusatzstoffe mit einer rotes Licht absorbierenden oder reflektierenden Einfärbung versehen wird, die im Falle des kreisrunden Filters in Umfangsrichtung, bzw. beim rechteckig ausgebildeten Filter vorzugsweise in Richtung des Verschiebeweges, von einem nicht eingefärbten Bereich zu einem Bereich mit maximaler Einfärbung hin vorzugsweise kontinuierlich zunimmt.

Ferner besteht die Möglichkeit, das Filter als Reflexionsfilter auszubilden, welcher insbesondere den Rotanteil im Spektrum über eine auf die Außenseite des Filters aufgebrachte Interferenz- oder Reflexionsschicht reflektiert bzw. abschwächt, und bei dem lediglich der kurzwellige Blauanteil des Spektrums durch das Filter nahezu ungeschwächt hindurchtritt. Die Veränderung des Transmissionsvermögens des Filters für rotes Licht über die Filterfläche hinweg wird hierbei in vorteilhafter Weise durch eine Variation der Flächenbelegung der aufgebrachten Interferenz- oder Reflexionsschicht erzielt, was z.B. durch ein Punktraster mit Punkten zunehmender Größe oder flächenmäßig zunehmender Dichte erreicht werden kann, die z.B. in einem bekannten Lithographieverfahren auf ein für rotes sowie für blaues Licht transparentes Filtermedium oder Substrat, wie z.B. Glas, aufgebracht werden können.

Weiterhin ergibt sich durch den Einsatz einer als Punktraster mit variablem Bedeckungsgrad aufgebrachten Interferenzfilterschicht eine vergleichsweise hohe Dynamik und ein großer Regelbereicht für die Helligkeit. So kann bei einer Glühlampe mit einer Nennleistung von 100 W durch Reduzierung des Lampenstromes von 8 A auf 4 A und gleichzeitiges Einbringen einer Filterschicht mit einem Bedeckungsanteil von 95% die Lichtintensität unter Beibehaltung der Farbtemperatur von 100% auf 0,2 % reduziert werden.

Bei der bevorzugten Ausführungsform der Erfindung wird die Lage oder Position des Filters im Beleuchtungsstrahlengang vorzugsweise motorisch über einen Schrittmotor verändert, der durch eine geeignete Steuerungseinrichtung in Abhängigkeit von einem vom Bediener gewählten Helligkeitswert der Glühlampe die Filterscheibe im Beleuchtungsstrahlengang in der Weise rotiert, bzw. linear verschiebt, dass die Farbtemperatur des auf das Präparat gerichteten Beleuchtungslichtes im Wesentlichen konstant gehalten wird. Hierdurch ergibt sich der Vorteil, dass der Bediener die Farbtemperatur nach einer Veränderung der Helligkeit durch eine entsprechende Strom/Spannungsänderung nicht von Hand durch Verfahren der Filterscheibe nachregeln muss.

Die Steuerungseinrichtung umfasst vorzugsweise einen Speicher, aus welchem die Werte für den der Lichtquelle zugeführten elektrischen Strom und/oder der der Lichtquelle zugeführten elektrischen Spannung zusammen mit den zugehörigen Werten für die Lage oder Position des Filters im Beleuchtungsstrahlengang zur Einstellung auf einen neuen Helligkeitswert abgespeichert sind, und von der Steuerungseinrichtung ausgelesen werden können. Die jeweiligen Werte für den Strom, bzw. die Spannung und die zugehörige Position der Filterscheibe im Beleuchtungsstrahlengang werden vorzugsweise durch eine Kalibrierung bestimmt, wozu beispielsweise ausgehend vom Strom-/Spannungswert für die maximale Helligkeit der Glühlampe die Filterscheibe in eine Position mit maximalem Transmissionsvermögen verfahren wird, in der sowohl der rote, als auch der blaue Anteil des von der Glühlampe emittierten Spektrums durch das Filter hindurchtritt. Nach Abspeichern der zugehörigen Werte für Strom/Spannung und Position der Filterscheibe wird die Helligkeit der Glühlampe reduziert und die Position der Filterscheibe durch Erhöhen oder Erniedrigen des zugeordneten Wertes für die Position unter Messung der Farbtemperatur solange verfahren, bis der ursprüngliche Wert für die Farbtemperatur wieder erreicht ist. Die zugehörigen Werte für die Helligkeit und den Strom/Spannung werden im Speicher abgelegt. Anschließend wird die Helligkeit in Schritten erneut reduziert und die jeweils zugehörige Position der Filterscheibe in der zuvor beschriebenen Weise bestimmt und abgespeichert, bis die Position erreicht ist, in der die Filterscheibe ihr minimales Transmissionsvermögen aufweist.

Gemäß der Erfindung umfasst eine Vorrichtung zur farbneutralen Regulierung der Helligkeit einer Glühlampe im Beleuchtungsstrahlengang eines Mikroskops ein variables optisches Blaufilter mit einem sich über die Filterfläche hinweg ändernden Transmissionsvermögen, welches durch einen Antrieb im Beleuchtungsstrahlengang verfahren werden kann. Der Antrieb, der vorzugsweise als Schrittmotor ausgebildet ist, ist mit einer elektronischen Steuerungseinrichtung verbunden, die den Antrieb zum Verfahren des Filters in der Weise steuert, dass die bei einer Verringerung der der Glühlampe zugeführten elektrischen Leistung auftretende Rotverschiebung des Spektrums des von der Glühlampe emittierten Lichts durch eine Blauverschiebung kompensiert wird. Die Vorrichtung besitzt den Vorteil, dass sie sich in einfacher Weise in bekannte Mikroskope einbauen lässt und damit eine kostengünstige Automatisierung der Geräte ermöglicht.

Ein weiterer Vorteil der erfindungsgemäßen Vorrichtung ist darin zu sehen, dass die maximal erreichbare Intensität des Lichts nicht beeinflusst wird.

Das Filter wird vorzugsweise durch eine mit Hilfe des Antriebs um eine Drehachse rotierbare Filterscheibe gebildet, die ein entlang eines im Wesentlichen konzentrisch zur Drehachse verlaufenden Weges zunehmendes Transmissionsvermögen für rotes Licht aufweist.

Das Filter mit variablem Transmissionsvermögen für rotes Licht kann jedoch in gleicher Weise auch durch ein mit Hilfe des Antriebs linear verschiebbares Filter gebildet werden, das ein entlang eines im Wesentlichen parallel zur Verschieberichtung verlaufenden Weges zunehmendes Transmissionsvermögen für rotes Licht aufweist.

Hierbei kann das Filter als ein aus Kunststoff, Glas oder einem anderen geeigneten Material gefertigtes Absorptionsfilter ausgebildet sein, welches für blaues Licht durchlässig ist und rotes Licht zumindest teilweise absorbiert, und bei welchem die Veränderung des Transmissionsvermögens des Filters für rotes Licht über die Filterfläche hinweg durch eine Variation der Dicke des Filters erzielt wird.

In gleicher Weise kann das in der erfindungsgemäßen Vorrichtung eingesetzte Filter als ein Reflexionsfilter ausgebildet sein, das einen Filterkörper aus einem für rotes sowie für blaues Licht durchlässigen Material besitzt, auf den eine Interferenz-Filterschicht in Form eines Punktrasters aufgebracht ist, die rotes Licht reflektiert bzw. absorbiert. Die Variation des Transmissionsvermögens für rotes Licht wird bei dieser Ausführungsform der erfindungsgemäßen Vorrichtung durch eine sich über die Filterfläche hinweg ändernde Flächenbelegung der Rasterpunkte, bzw. eine Variation der Größe oder der Form der Rasterpunkte erzielt, die in bekannter Weise z.B. in einem Lithographie- und anschließenden Aufdampfprozess auf die Filterfläche des Filterkörpers aufgebracht werden können.

Die Interferenz-Filterschicht hat beispielsweise einen Spektralverlauf mit den folgenden Werten für das Transmissionsvermögen, das nachfolgend allgemein mit "T" bezeichnet wird:
T=75% bei einer Wellenlänge λ = 425 nm,
T=17% bei einer Wellenlänge λ = 550 nm und
T= 5% bei λ = 650 nm.

Um bei dieser Ausführungsform der erfindungsgemäßen Vorrichtung eine durch die sich ändernde Flächenbelegung der Reflexions- oder Interferenzschicht hervorgerufene Änderung der Intensität des von der Glühlampe emittierten Lichts über das beleuchtete Präparat hinweg zu vermeiden, wird das Filter vorzugsweise nahe einer im Beleuchtungsstrahlengang des Mikroskops vorgesehenen Aperturblende angeordnet.

Die Erfindung wird im folgenden mit Bezug auf die Zeichnungen anhand von Beispielen beschrieben.

In den Zeichnungen zeigen
- Fig. 1: eine schematische Darstellung eines Mikroskops mit einer erfindungsgemäßen Vorrichtung zur Regulierung der Helligkeit der im Mikroskop eingesetzten Lichtquelle,
- Fig. 2a: eine schematische Darstellung der erfindungsgemäßen Vorrichtung, bei der das Filter durch eine kreisrunde Filterscheibe mit einer auf diese als Punktraster aufgebrachten Interferenz- oder Reflexionsschicht gebildet wird, die eine kontinuierlich zunehmende Flächenbelegung aufweist,
- Fig. 2b: eine schematische Darstellung der erfindungsgemäßen Vorrichtung, bei der das Filter durch ein rechteckförmiges Filter mit einer auf dieses als Punktraster aufgebrachten Interferenzoder Reflexionsschicht gebildet wird, die eine kontinuierlich zunehmende Flächenbelegung aufweist,
- Fig. 3a: eine schematische Darstellung der erfindungsgemäßen Vorrichtung, bei der das Filter durch eine kreisrunde Filterscheibe mit einer auf diese als Punktraster aufgebrachten Interferenz- oder Reflexionsschicht gebildet wird, die eine in Stufen zunehmende Flächenbelegung aufweist,
- Fig. 3b: eine schematische Darstellung der erfindungsgemäßen Vorrichtung, bei der das Filter durch eine rechteckförmige Filterscheibe mit einer auf diese als Punktraster aufgebrachten Interferenz- oder Reflexionsschicht gebildet wird, die eine in Stufen zunehmende Flächenbelegung aufweist,
- Fig. 4a: eine schematische Darstellung der erfindungsgemäßen Vorrichtung, bei der das Filter als ein Absorptionsfilter mit einer kreisrunden Filterscheibe zunehmender Dicke ausgebildet ist,
- Fig. 4b: eine schematische Darstellung der erfindungsgemäßen Vorrichtung, bei der das Filter als ein Absorptionsfilter mit einer rechteckförmigen Filterscheibe zunehmender Dicke ausgebildet ist,
- Fig. 5: den spektralen Verlauf des Transmissionsvermögens T eines in der erfindungsgemäßen Vorrichtung zum Einsatz gelangenden Absorptionsfilters bei einer Dicke von 1 mm, und
- Fig. 6: den spektralen Verlauf des Transmissionsvermögens T einer in der erfindungsgemäßen Vorrichtung zum Einsatz gelangenden Interferenzfilterschicht, welche in Form eines Punktrasters mit variablem Bedeckungsgrad auf die Filterfläche aufgebracht wird.

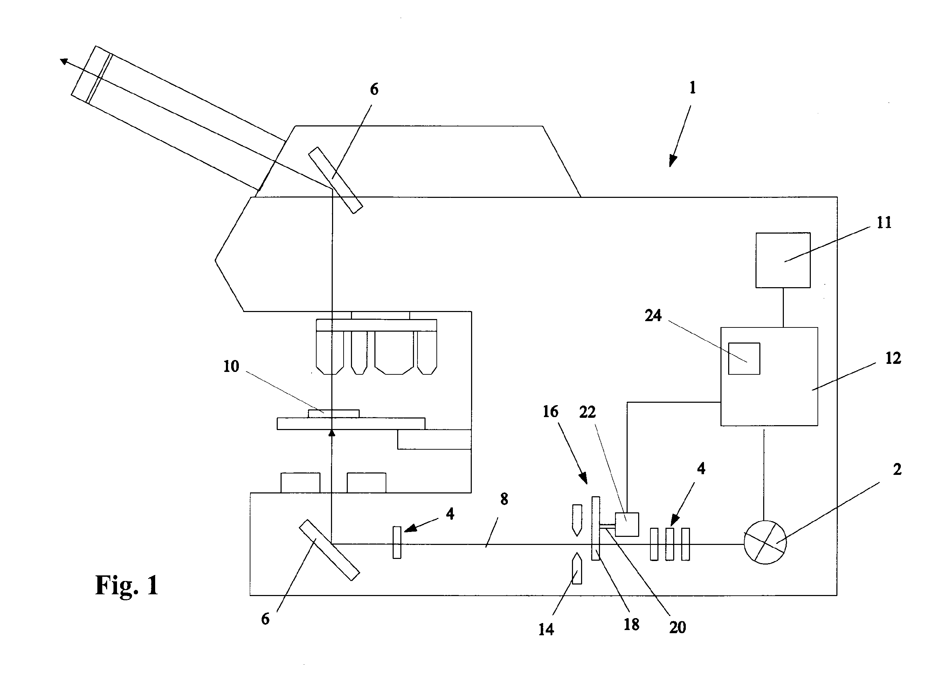

Das in Fig. 1 dargestellte Mikroskop 1 enthält eine Lichtquelle 2 in Form einer Glühlampe, deren Licht über ein System von Linsen 4 und Spiegeln 6 entlang eines Beleuchtungsstrahlengangs 8 zur Beleuchtung eines zu untersuchenden Präparats 10 geführt ist.

Die Lichtquelle 2 ist elektrisch mit einer Steuerungseinrichtung 12 verbunden, welche die der Lichtquelle 2 von einer Stromquelle 11 zugeführte elektrische Leistung steuert, um die Helligkeit der Lichtquelle 2 auf einen gewünschten Wert einzustellen, der vom Bediener über einen mit der Steuerungseinrichtung 12 verbunden, nicht dargestellten Einstellvorrichtung vorgegeben werden kann.

In den Beleuchtungsstrahlengang 8 ist im Bereich einer Aperturblende 14 ein erfindungsgemäßes optisches Filter 16 mit einem für rotes Licht variablen Transmissionsvermögen angeordnet, welches durch eine im Wesentlichen kreisförmige Filterscheibe 18 gebildet wird. Die Filterscheibe 18 ist mit der Antriebswelle 20 eines durch die Steuerungseinrichtung 12 gesteuerten elektrischen Schrittmotors 22 verbunden, der die Filterscheibe 18 bei einer Veränderung der Helligkeit der Lichtquelle 2 in eine Position dreht, in der ein Bereich der Filterscheibe 18 mit einem die Rotverschiebung des Spektrums kompensierenden Transmissionsvermögen im Beleuchtungsstrahlengang 8 angeordnet wird. Die jeweiligen Positionswerte der Filterscheibe 18 und die zugehörigen Werte für den der Lichtquelle 2 zugeführten Strom, bzw. die der Lichtquelle 2 zugeführte Spannung sind in einem Speicher 24 der Steuerungseinrichtung 12 abgelegt.

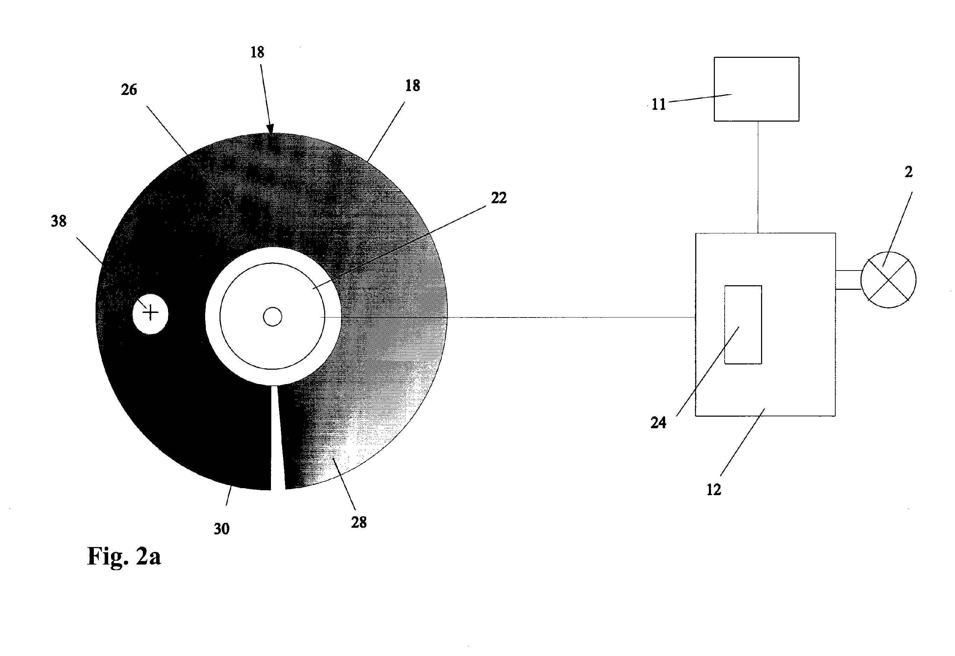

Wie der Darstellung von Fig. 2a entnommen werden kann, wird das variable Transmissionsvermögen des optischen Filters 16 für rotes Licht durch eine unterschiedliche Flächenbelegung der Filterscheibe mit einer Reflexions- oder Interferenzschicht 26 erzielt, die in den Figuren aus darstellungstechnischen Gründen nur schematisch angedeutet ist, und die in Umfangsrichtung von einem Minimalwert 28 ohne Belegung zu einem Maximalwert 30 mit vollständiger oder nahezu vollständiger Belegung im Wesentlichen kontinuierlich zunimmt. Der durch den Lichtstrahl der Lichtquelle 2 auf dem optischen Filter 16 erzeugte Lichtfleck 38 ist in den Figuren 2a bis 3b schematisch durch einen Kreis mit einem darin angeordneten Kreuz angedeutet.

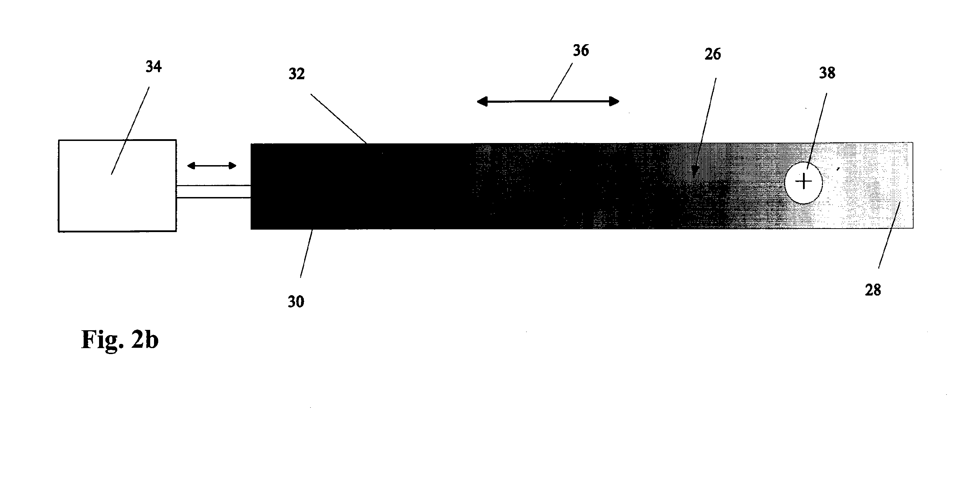

Wie aus Fig. 2b entnehmbar ist, wird gemäß einer weiteren Ausführungsform der Erfindung das optische Filter 16 durch ein im Wesentlichen rechteckförmiges Filter 32 gebildet, das ebenfalls mit einer Reflexions- oder Interferenzschicht 26 beschichtet ist. Das Filter wird durch einen Spindelantrieb 34 in Richtung des Doppelpfeils 36 linear verfahren. In gleicher Weise wie bei der Ausführungsform von Fig. 2a nimmt die Flächenbelegung der Reflexions- oder Interferenzschicht 26 von einem Minimalwert 28 zu einem Maximalwert 30 hin im Wesentlichen kontinuierlich zu.

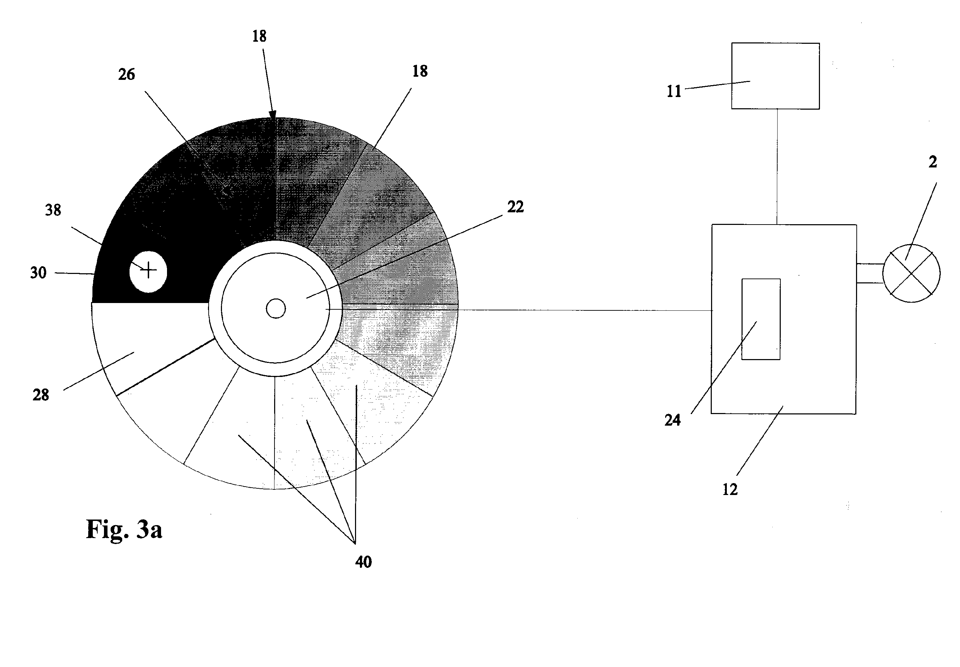

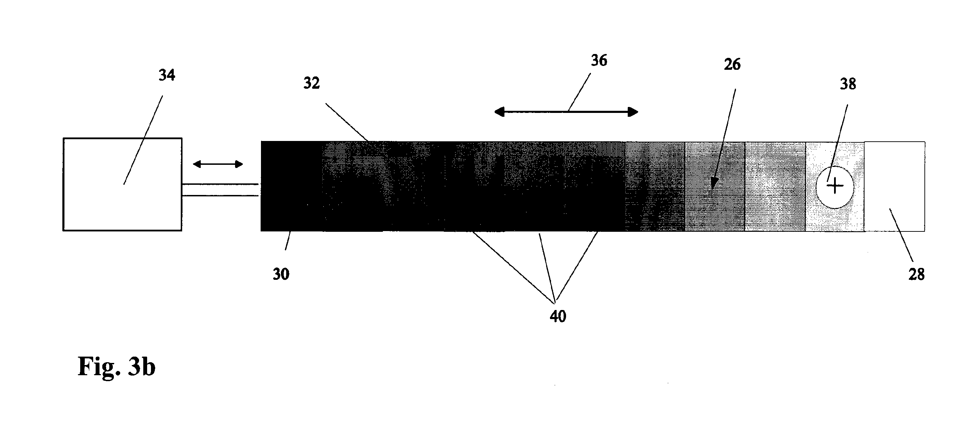

Gemäß einer weiteren, in Fig. 3a und 3b gezeigten Ausführungsform der Erfindung nimmt die Dichte der Reflexions- oder Interferenzschicht 26 über den Umfang der kreisrunden Filterscheibe 18, bzw. in Richtung des Verschiebeweges der rechteckförmigen Filterscheibe 32 in Stufen zu, was in den betreffenden Figuren durch Segmente 40 mit im Wesentlichen konstanter Flächenbelegung zum Ausdruck gebracht ist.

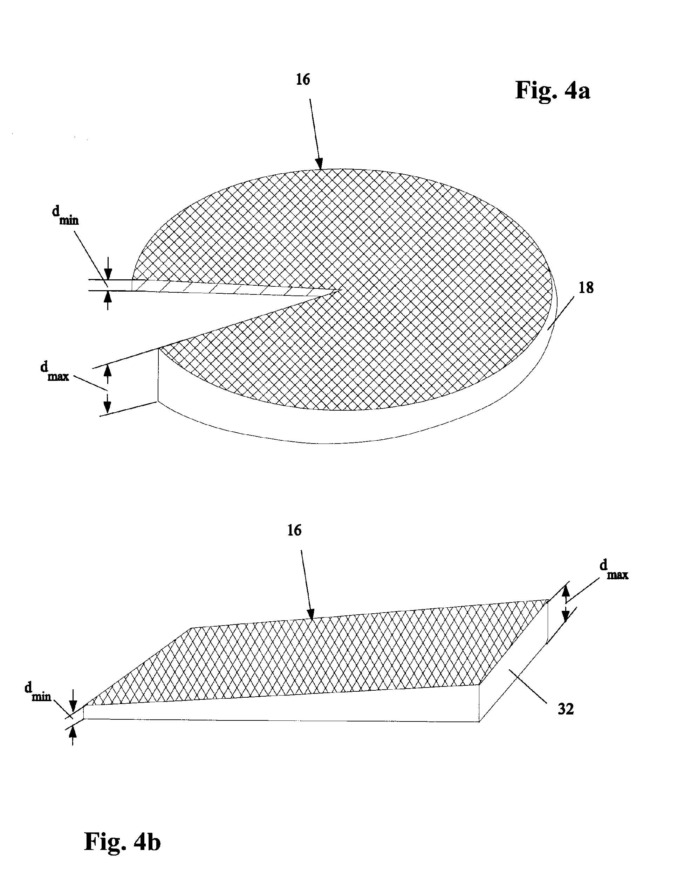

Wie in den Figuren 4a und 4b gezeigt ist, ist bei einer weiteren Ausführungsform der Erfindung das optische Filter 16 als ein Absorptionsfilter ausgebildet, bei dem die Variation des Transmissionsvermögens durch eine Veränderung der Dicke der aus einem für rotes Licht teilweise durchlässigen Material gefertigten Filterscheibe erzielt wird. So nimmt die Dicke der Filterscheibe 18 bei der in Fig. 4a gezeigten Ausführungsform der Erfindung in Umfangsrichtung, bzw. die Dicke der rechteckigen, keilförmig ausgebildeten Filterscheibe 32 bei der in Fig. 4b gezeigten Ausführungsform in Richtung der Verschiebung von einem Minimalwert dₘᵢₙ zu einem Maximalwert dₘₐₓ im Wesentlichen kontinuierlich zu. Hierbei wird bei maximaler Helligkeit der dünne Bereich der Filterscheiben 18, 32 in den Beleuchtungsstrahlengang eingebracht und die Filterscheiben 18, 32 mit zunehmender Verminderung der Helligkeit in Richtung des Bereichs großer Dicke verfahren. Der Minimalwert der Dicke dₘᵢₙ kann beispielsweise im Bereich von 0,1 mm bis 0,5 mm und der Maximalwert dₘₐₓ im Bereich von z.B. 1,5 bis 2 mm liegen, wobei die tatsächlichen Werte in Abhängigkeit vom verwendeten Material des Absorptionsfilters sowie auch von der Helligkeit der Lichtquelle 2 bei der Nennspannung zu wählen sind.

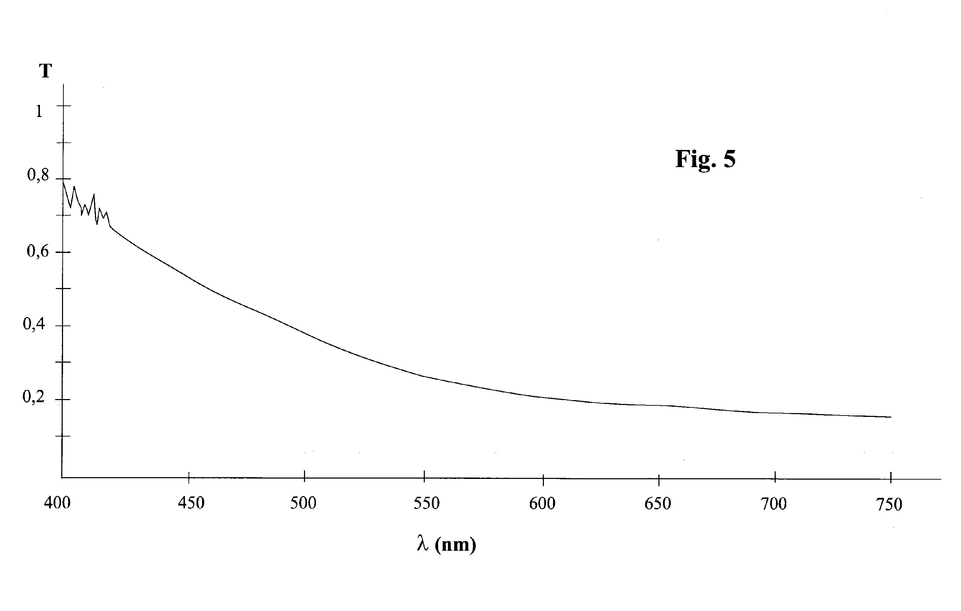

In Fig. 5 ist der spektrale Verlauf des Transmissionsvermögens T eines in der erfindungsgemäßen Vorrichtung zum Einsatz gelangenden Absorptionsfiltermaterials bei einer Dicke von 1 mm aufgezeigt, wie es in den Filtern gem. Fig. 4a und 4b zum Einsatz gelangt.

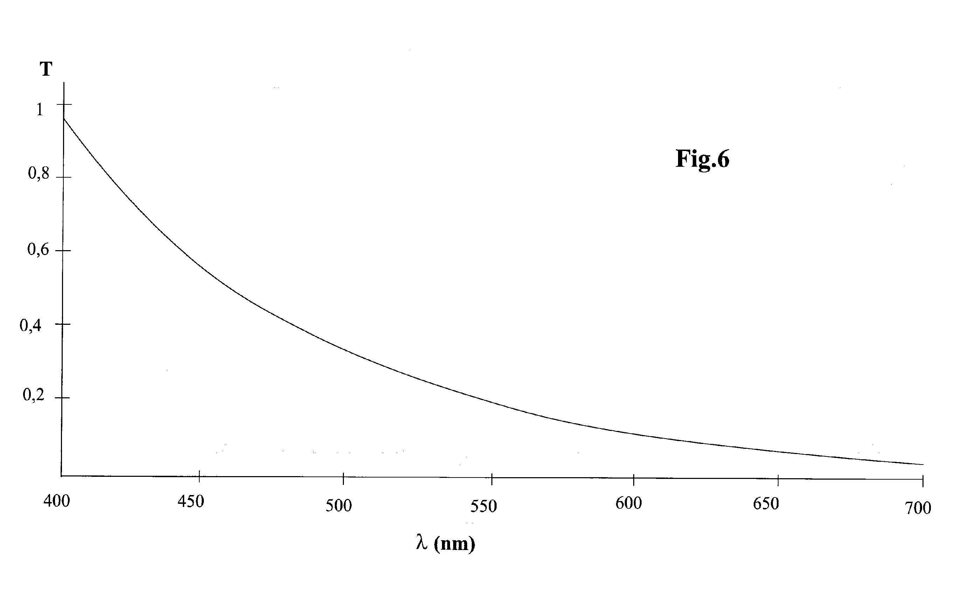

Fig. 6 zeigt den spektralen Verlauf des Transmissionsvermögens T einer in der erfindungsgemäßen Vorrichtung zum Einsatz gelangenden Interferenzschicht 26, welche in Form eines Punktrasters mit variablem Bedeckungsgrad auf die Filterfläche der Filter nach den Figuren 2a bis 3b aufgebracht wird.

### Bezugszeichenliste

- 1: Mikroskop
- 2: Lichtquelle
- 4: Linsen
- 6: Spiegel
- 8: Beleuchtungsstrahlengang
- 10: Präparat
- 11: Stromquelle
- 12: Steuerungseinrichtung
- 14: Aperturblende
- 16: Optisches Filter
- 18: Filterscheibe
- 20: Antriebswelle
- 22: Schrittmotor
- 24: Speicher
- 26: Interferenzschicht
- 28: Minimalwert
- 30: Maximalwert
- 32: rechteckförmiges Filter
- 34: Spindelantrieb
- 36: Doppelpfeil
- 38: Lichtfleck
- 40: Segmente
- dₘᵢₙ: Minimalwert für die Dicke
- dₘₐₓ: Maximalwert für die Dicke

## Patentansprüche

1. Vorrichtung zur farbneutralen Helligkeitseinstellung im Beleuchtungsstrahlengang (8) eines Mikroskops (1),
- mit einer elektrisch gespeisten Lichtquelle (2) im Beleuchtungsstrahlengang (8), wobei durch Einstellung der der Lichtquelle zugeführten elektrischen Leistung die Helligkeit des Beleuchtungsstrahlengangs (8) einstellbar ist,
- und mit einer Einrichtung zur Kompensation der mit einer Erniedrigung der zugeführten elektrischen Leistung einhergehenden Rotverschiebung des Lichtquellenspektrums,
**dadurch gekennzeichnet,**
- **dass** als Einrichtung zur Kompensation im Beleuchtungsstrahlengang (8) ein verschiebbares optisches Filter (16) angeordnet ist,
- dessen Transmissionsvermögen für rotes Licht sich über die Filterfläche hinweg ändert und bei Verschiebung des Filters (16) eine Blauverschiebung des Beleuchtungsspektrums in dem Maße bewirkt,
- **dass** durch Verschiebung des Filters (16) eine durch die Verminderung der elektrischen Leistung bedingte Rotverschiebung des Lichtquellenspektrums kompensierbar ist.

2. Vorrichtung nach Anspruch 1, **dadurch gekennzeichnet,**
- **dass** dem Filter (16) ein motorischer Antrieb (22; 34) zugeordnet ist.

3. Vorrichtung nach Anspruch 2, **dadurch gekennzeichnet,**
- **dass** eine Steuerungseinrichtung (12) vorgesehen ist, die abhängig von der eingestellten Lichtquellenhelligkeit die Lage des Filters (16) motorisch ändert und dabei die Farbtemperatur des Beleuchtungslichtes automatisch konstant hält,
- und **dass** ein Speicher (24) vorgesehen ist, in dem die Strom- und/oder Spannungswerte für die Einstellung der Helligkeit der Lichtquelle (2) zusammen mit den zugehörigen Helligkeitswerten und den Werten für die zur Kompensation der Rotverschiebung erforderlichen Filterlagen abgelegt und zur Einstellung auf einen neuen Helligkeitswert auslesbar sind.

4. Vorrichtung nach einem der Ansprüche 1 bis 3, **dadurch gekennzeichnet, dass** das Filter (16) als rotierbare Filterscheibe (18) mit einem konzentrisch zur Drehachse von einem Minimalwert (28) bis zu einem Maximalwert (30) zunehmenden Transmissionsvermögen ausgebildet ist.

5. Vorrichtung nach einem der Ansprüche 1 bis 3, **dadurch gekennzeichnet, dass** das Filter (16) als linear verschiebbares Filterelement (32) mit einem von einem Minimalwert (28) bis zu einem Maximalwert (30) zunehmenden Transmissionsvermögen ausgebildet ist.

6. Vorrichtung nach einem der Ansprüche 1 bis 5, **dadurch gekennzeichnet, dass** das Transmissionsvermögen kontinuierlich oder in Stufen zunimmt.

7. Vorrichtung nach einem der Ansprüche 1 bis 6, **dadurch gekennzeichnet, dass** das Filter (16) als Absorptionsfilter mit einer veränderlichen Dicke ausgebildet ist und sich das Transmissionsvermögen als Funktion der Dicke ändert.

8. Vorrichtung nach einem der Ansprüche 1 bis 6, **dadurch gekennzeichnet, dass** das Filter (16) als Interferenz- oder Reflexionsfilter mit einer veränderlichen Flächenbelegung ausgebildet ist und sich das Transmissionsvermögen als Folge der veränderlichen Flächenbelegung ändert, wobei die Flächenbelegung vorzugsweise als ein in einem Lithographie- und anschliessendem Aufdampfprozess aufgebrachtes Punktraster ausgebildet ist.

9. Vorrichtung nach Anspruch 8, **dadurch gekennzeichnet, dass** das Transmissionsvermögen T der Interferenzschicht bei einer Wellenlänge von 425 nm T=75%, bei 550 nm T=17% und bei 650 nm T=5% beträgt.

10. Vorrichtung nach einem der Ansprüche 1 bis 9, **dadurch gekennzeichnet, dass** das Filter (16) unmittelbar neben einer im Beleuchtungsstrahlengang (8) des Mikroskops (1) vorgesehenen Aperturblende (14) angeordnet ist.
